# EUROPÄISCHE PATENTANMELDUNG

(11) **EP 1 769 897 A1**
(43) Veröffentlichungstag der Anmeldung: **04.04.2007**
(21) Anmeldenummer: 06119152.4
(22) Anmeldetag: 18.08.2006
(51) Int. Cl.: B29C 45/20, B29C 45/17, B29C 45/84

(54) **Vorrichtung und Verfahren zum Einspritzen sowie Schutzeinrichtung für solche**

(30) Priorität: 09.09.2005 DE 102005043233
(71) Anmelder: Demag Ergotech GmbH, 90571 Schwaig (DE)
(72) Erfinder: Seidel, Jörg, 90559 Burgthann (DE); Brada, Ralf, 99625 Kölleda (DE)
(74) Vertreter: Maierl, Christine

(57) **Zusammenfassung**

Die vorliegende Erfindung betrifft eine Vorrichtung zum Einspritzen mit einer Einspritzeinheit (2), die eine Einspritzdüse umfasst, und einer Schutzeinrichtung (1), die an der Einspritzeinheit (2) angeordnet ist und eine relativ zur letzteren beweglich gelagerte Schutzplatte aufweist, sowie eine in einer solchen Vorrichtung einsetzbare Schutzeinrichtung und ein Verfahren zum Betreiben einer solchen Vorrichtung.

Kritisch ist bei Einspritzvorrichtungen die Gewährleistung eines ausreichenden Schutzes des Bedienpersonals.

Hierzu wird erfindungsgemäß die Schutzplatte (6) derart ausgestaltet, dass bei einem Andocken der Einspritzeinheit (2) an eine Angussöffnung einer Form unter Zwischenschaltung der Schutzplatte (6) eine Strömungsverbindung mit der Einspritzdüse (26) herstellbar ist. Des weiteren wird eine Schutzeinrichtung mit einem Grundelement und einer relativ zu diesem beweglich gelagerten Schutzplatte (6) vorgestellt, die ein Düsensystem aufweist. Weiterhin wird ein Verfahren beschrieben, bei dem eine Einspritzeinheit (2) und eine Schutzplatte (6) im angedockten Zustand eine Strömungsverbindung bilden, während die Schutzplatte (6) in einem abgehobenen Zustand beabstandet zurselben angeordnet wird.

## Beschreibung

Die vorliegende Erfindung betrifft eine Vorrichtung zum Einspritzen mit einer Einspritzeinheit, die eine Einspritzdüse umfasst, und einer Schutzeinrichtung, die an der Einspritzeinheit angeordnet ist und eine relativ zur Einspritzeinheit beweglich gelagerte Schutzplatte aufweist, sowie eine Schutzeinrichtung zur Verwendung insbesondere in einer solchen Vorrichtung, mit einem Grundelement und einer relativ zu diesem beweglich gelagerten Schutzplatte. Ebenso betrifft die Erfindung ein Verfahren zum Betreiben einer Vorrichtung zum Einspritzen mit einer Einspritzeinheit und einer Schutzeinrichtung, die eine Schutzplatte umfasst, wobei die Schutzplatte bei einem Andockvorgang relativ zu der Einspritzeinheit verfahren und in einem abgehobenen Zustand beabstandet zur Einspritzeinheit angeordnet wird.

Mit Einspritzeinheiten können die unterschiedlichsten Materialien verarbeitet werden, beispielsweise plastifizierter Kunststoff, vermischte Ausgangsmaterialien für Duroplaste oder aufgeschmolzenes flüssiges Metall. Das Material wird im allgemeinen aus einer Austrittsöffnung der Einspritzeinheit, insbesondere einer Einspritzdüse derselben, durch eine Angussöffnung in eine Formkavität eingespritzt, die zwischen zwei Formhälften einer Form ausgebildet ist. Bei der Verarbeitung von solchen Materialien mit einer Einspritzeinheit muss deshalb dafür gesorgt werden, dass das Bedienpersonal hinreichend geschützt ist, wobei besonderes Augenmerk auf unkontrolliert aus der Einspritzeinheit austretendes Material zu legen ist, denn andernfalls kann es bei Kontakt mit dem Material beispielsweise zu Verbrennungen oder Verätzungen kommen.

Ein solcher Schutz ist besonders wichtig, wenn die Einspritzeinheit derart an die Form andockt, dass bei geöffneter Form die Einspritzdüse in Richtung des Bedienpersonals weist. Dies kann beispielsweise beim sogenannten Mehrkomponentenspritzguss auftreten, bei dem eine weitere Einspritzeinheit häufig senkrecht zu einer ersten im Bereich der Formhälftentrennfläche auf der dem Bedieneinheit gegenüberliegenden Seite angeordnet ist. Zu einem unkontrollierten Austreten von Material aus einer Einspritzeinheit kann es beispielsweise aufgrund von Zersetzungsprozessen des in der Einspritzeinheit bevorrateten Materials kommen, die meist unter Gasentwicklung ablaufen. Auch kann aufgrund einer Fehlbedienung oder eines Steuerungsfehlers ein vorzeitiges Abspritzen erfolgen.

Deshalb ist es bekannt, pneumatisch oder hydraulisch angetriebene Schutzklappen vor einer Austrittsöffnung der Einspritzeinheit, insbesondere einer Einspritzdüse derselben, zu positionieren, die erst kurz vor einem Andocken der Einspritzeinheit an eine Angussöffnung einer Form aufgeklappt werden. Unter Andocken wird hier das Anfahren der Einspritzeinheit bzw. der Einspritzdüse derselben an eine Angussöffnung der Form unter Aufbringen eines ausreichenden Drucks verstanden, so dass eine im wesentlichen dichte Strömungsverbindung zwischen Einspritzeinheit und Angussöffnung herstellbar und Material von der Einspritzeinheit in die Formkavität einbringbar ist. Da die beschriebenen Schutzklappen aktiv angetrieben sind, muss ein elektrischer Näherungsschalter vorgesehen werden, um eine entsprechende Ansteuerung der Schutzklappe zu ermöglichen.

Dies ist nachteilig, da bei einem Ausfall oder einer Störung des elektrischen Näherungsschalters oder des entsprechenden aktiven Ansteuerungsmechanismus ein sicherer Schutz gegen unkontrolliert austretendes Material nicht weiter gewährleistet ist. Zudem wird durch die aktive Ansteuerung die Zykluszeit verlängert, die Fehleranfälligkeit ist aufgrund der Abhängigkeit von aktiven Komponenten erhöht und außerdem besteht in den Zeiträumen, in denen die Schutzklappe auf- bzw. zugeklappt wird, kein sicherer Schutz.

Es ist auch bekannt, einen entsprechenden Schutzmechanismus in einer Einspritzdüse einer Einspritzeinheit vorzusehen, die dann nach Art einer Schiebeverschlussdüse ausgebildet ist. Eine solche Einspritzdüse weist einen federbelasteten Verschlusstorpedo in einem Düsenkanal auf, und ist derart ausgestaltet, dass bei Ausüben von Druck auf eine Düsenanlagefläche der Verschlusstorpedo im Düsenkanal derart gegen die Federkraft verschoben wird, dass der Düsenkanal geöffnet wird. So kann bei Anlage der Düsenanlagefläche an eine Angussöffnung unter Druck der Düsenkanal geöffnet werden, und ein Einspritzen von der Einspritzeinheit durch den Düsenkanal und die Angussöffnung in eine Formkavität einer Form ist ermöglicht. Bei Abheben der Einspritzeinheit und damit der Einspritzdüse wird der Verschlusstorpedo innerhalb des Düsenkanals aufgrund der Federvorspannung in eine Verschlussposition verfahren, wodurch der Düsenkanal verschlossen wird und kein weiterer Materialaustritt möglich ist. Bei einer solchen Schiebeverschlussdüse ist ein Schutz gegen unkontrolliertes Austreten von Material aufgrund der Zwangssteuerung durch die Feder im abgehobenen Zustand immer gewährleistet.

Nachteilig ist jedoch die hohe Störanfälligkeit der auf Passung gearbeiteten mechanischen Bauteile dieser Düse, die zudem aufgrund von Verschmutzungen leicht ihre Funktionalität einbüßen. Außerdem weist eine solche Düse lange Fließwege für das Material auf, das dabei, insbesondere auch im Fall einer notwendigen Beheizung, der Degradation unterliegt, wodurch die Qualität der hergestellten Formteile leidet. Interne Umlenkkanäle, die die Schmelze um den Verschlusstorpedo führen, verschlechtern die Schmelzequalität zusätzlich. Weitere Nachteile ergeben sich daraus, dass das Material durch die Schiebeverschlussdüse in der Einspritzeinheit eingesperrt wird, was zu verfahrenstechnischen Problemen führen kann.

Ein kontrolliertes Entleeren der Einspritzeinheit, das beispielsweise zum Entsorgen von Restmaterial bei Materialwechseln, von noch verunreinigtem oder nicht ganz hochwertigem Material direkt nach einem Materialwechsel oder aber auch bei einer Neuinbetriebnahme nach längeren Standzeiten notwendig sein kann, gestaltet sich bei Verwendung einer Schiebeverschlussdüse schwierig. Damit ein Abspritzen des Materials gegen eine geeignete Oberfläche oder in einen geeigneten Raum möglich ist, muss eine spezielle Arretierung an der Schiebeverschlussdüse angebracht werden, so dass der Verschlusstorpedo auch in abgehobenem Zustand in einer Offenstellung bleibt. Zudem muss die Einspritzeinheit entsprechend vor einer Prallplatte oder an einem Auffangbehälter positioniert werden, so dass ein einfaches Abspritzen möglich ist.

Alternativ könnte unter Anlage an die Angussöffnung durch die geöffnete Form abgespritzt werden, was jedoch eine starke Verunreinigung der Form mit entsprechendem Reinigungsaufwand bedeutet. Nachteilig ist weiterhin, dass eine solche Schiebeverschlussdüse aufgrund der Vielzahl von zusammenwirkenden Passungsteilen hohe Anfertigungskosten aufweist.

Aus der DE 103 18 826 B3 ist eine Spritzschutzeinrichtung für eine Einspritzeinrichtung einer Spritzgießmaschine bekannt, das eine Schutzplatte aufweist, die zwischen einer einen Düsenkanal der Einspritzeinheit freigebenden Öffnungslage und einer diese abdeckenden Abdecklage umsteuerbar ist. Hier erfolgt die Umsteuerung durch ein mechanisches Schaltwerk, das bei einem Andocken der Einspritzeinheit an einer Form zwischen dieser und der Schutzplatte stellkraftübertragend wirkt. Das mechanische Schaltwerk weist hierbei einen bei Berührung der Form verschiebbaren Tastfinger auf, der das Umschalten der Schutzplatte zwangssteuert. Nachteilig hieran ist, dass die Mechanikkomponenten des Schaltwerks weitgehend offen liegen und damit bei Austreten von Formmasse leicht verschmutzen und somit störanfällig sind.

Weiterhin muss an der Form im Bereich der Angussöffnung genügend Platz vorhanden sein, um eine ausreichende Anlagefläche für das mechanische Schaltwerk und insbesondere den Tastfinger bereitzustellen. Bei modernen Formen wird es indes aufgrund zusätzlicher Anbauten und Einrichtungen, wie beispielsweise Temperiervorrichtungen und deren Zu- und Abführleitungen sowie Kernzügen und ähnlichem, immer schwieriger, ausreichend freie Anlagefläche zu gewährleisten. Nachteilhaft an dieser Schutzeinrichtung ist weiterhin, dass bei einem Abspritzen ins Freie zur Entleerung der Einspritzeinheit bei einem Materialwechsel oder ähnlichem nur geringe Raumtoleranzen vorhanden sind und eine sehr starke Verschmutzung der Schutzplatte und des sie betätigenden Mechanismus resultiert.

Aufgabe der vorliegenden Erfindung ist es deshalb, eine Vorrichtung zum Einspritzen sowie eine bei einer entsprechenden Vorrichtung verwendbare Schutzeinrichtung vorzustellen, die einfach und kostengünstig im Aufbau bei gleichzeitig minimaler Störanfälligkeit ist und einen effektiven Schutz für das Personal gewährleistet. Desgleichen soll ein Verfahren zum Betreiben einer Vorrichtung zum Einspritzen vorgestellt werden, das einfach im Betrieb bei geringer Störanfälligkeit und Gewährleistung eines hohen Sicherheitsniveaus für das Bedienpersonal ist.

Diese Aufgabe wird durch eine Vorrichtung zum Einspritzen mit einer Einspritzeinheit gelöst, die eine Einspritzdüse umfasst, und einer Schutzeinrichtung, die an der Einspritzeinheit angeordnet ist und eine relativ zur Einspritzeinheit beweglich gelagerte Schutzplatte aufweist, bei der die Schutzplatte derart ausgestaltet ist, dass bei einem Andocken der Einspritzeinheit an eine Angussöffnung einer Form unter Zwischenschaltung der Schutzplatte eine Strömungsverbindung mit der Einspritzdüse herstellbar ist.

Eine solche Vorrichtung zum Einspritzen weist eine Einspritzeinheit auf, bei der es sich um ein separates Einspritzaggregat, beispielsweise nach Art eine Kolbeneinspritzeinheit oder aber auch um ein kombiniertes Aggregat, beispielsweise nach Art einer Schneckenkolbeneinspritzeinheit handeln kann. Die Einspritzeinheit weist eine Einspritzdüse auf, durch die das zu verarbeitende Material aus der Einspritzeinheit durch eine Angussöffnung in eine Formkavität einer Form einspritzbar ist. Eine an der Einspritzeinheit angeordnete Schutzeinrichtung weist eine relativ zur Einspritzeinheit beweglich gelagerte Schutzplatte auf, die bei einem unkontrollierten Austritt von Material aus der Einspritzeinheit eventuelles Bedienpersonal abschirmt. Die Schutzplatte ist zudem derart ausgestaltet, dass bei einem Andocken der Einspritzeinheit an eine Angussöffnung einer Form eine Strömungsverbindung mit der Einspritzdüse der Einspritzeinheit unter Zwischenschaltung der Schutzplatte herstellbar ist. Zu diesem Zweck kann die Schutzplatte beispielsweise eine kleine Durchlassöffnung aufweisen, die in angedocktem Zustand derart mit der Einspritzdüse zur Deckung bringbar ist, dass Material von der Einspritzdüse durch die Durchlassöffnung zu der Angussöffnung über eine Strömungsverbindung transportierbar ist. Bei einer solchen Durchlassöffnung handelt es sich um den einfachsten Fall einer Düse. Vorzugsweise kann die Durchlassöffnung derart ausgestaltet sein, dass ihre Abmessungen den Maßen der Einspritzdüse entsprechen und ihr Durchmesser nicht größer als der des Düsenkanals der Einspritzdüse ist.

Die Schutzplatte ist in nicht angedocktem, also abgehobenen Zustand durch ihre bewegliche Lagerung gegenüber der Einspritzeinheit derart lagerbar, dass sie von dieser beabstandbar ist. So kann sie effektiven Schutz vor austretendem Material bieten, da die Durchlassöffnung oder sonstige Mittel zum Herstellen einer Strömungsverbindung mit der Einspritzdüse vorzugsweise derart bemessen sind, dass bei einer Beabstandung keinerlei Gefahr eines Materialdurchtritts durch dieselben gegeben ist. Austretendes Material prallt an der Schutzplatte ab.

Durch die erfindungsgemäße Vorrichtung kann Bedienpersonal, das sich im Bereich der Einspritzdüse einer Einspritzeinheit aufhält, effektiv vor unkontrolliert austretendem Material geschützt werden. Solche Schutzmechanismen sind insbesondere im Fall des Mehrkomponenten-Spritzgießens von großer Wichtigkeit, bei dem zusätzliche Einspritzeinheiten beispielsweise in den sogenannten L- oder V-Stellungen vorgesehen sein können. Hier erfolgt ein Einspritzen nicht wie bei standardmäßig vertriebenen Einkomponenten-Spritzgießmaschinen durch eine Formaufspannplatte in die Formkavität, die bereits eine gewisse Art des Spritzschutzes dadurch aufweisen, dass bei abgedockter Einspritzeinheit unkontrolliert ausspritzendes Material in einen räumlich eng begrenzten Bereich zwischen Einspritzdüse und Formaufspannplatte entleert wird. In der L-Stellung kann die Einspritzeinheit horizontal an der Form in rechtem Winkel zur Schließrichtung derselben angeordnet sein. Ein Einspritzen kann bei geschlossenem Formwerkzeug entweder durch einen Angusskanal in der Formtrennebene, oder aber durch einen, bevorzugt in der stationären Formhälfte vorgesehenen, Angusskanal erfolgen. In der V-Stellung ist die Einspritzeinheit meist vertikal oberhalb des Formwerkzeugs angeordnet, ein Einspritzen erfolgt ebenfalls bevorzugt im Bereich der Formtrennebene oder durch einen separaten, in der Form vorgesehenen Angusskanal.

Insbesondere bei einem Einspritzen im Bereich der Trennebene weist bei geöffneter Form die Einspritzeinheit im Falle der L-Stellung direkt auf das auf der Gegenseite befindliche Bedienpersonal. In der V-Stellung spritzt solches Material unkontrolliert in den geöffneten Werkzeugraum, der dem Bedienpersonal zugänglich ist, sowie den davorliegenden Bedienbereich. Das Bedienpersonal kann demgemäß durch unkontrolliert austretendes, heißes und/oder ätzendes Material sehr leicht verletzt werden.

Bevorzugter Weise kann die Schutzplatte in Andockrichtung relativ zur Einspritzeinheit verschieblich gelagert sein, hierbei handelt es sich um eine Linearbewegung. Dies hat sich insbesondere insofern als vorteilhaft erwiesen, dass keinerlei komplexe Schwenk- oder Kippbewegungen vorzunehmen sind, die fehleranfälliger und aufwendiger in der Mechanik sind. Zudem findet beim Andocken der Einspritzeinheit bereits eine Relativbewegung zwischen Einspritzeinheit und Formwerkzeug statt, die bei einer Verschieblichkeit der Schutzplatte in dieser Richtung ausnutzbar sein kann. Durch die Verschieblichkeit der Schutzplatte gegenüber der Einspritzeinheit in Andockrichtung ist ein effektiver Schutz bereits bei relativ kleinen Ausdehnungen der Schutzplatte gewährleistbar, da lediglich ein Bereich durch die Schutzplatte abzudecken ist, in dem unkontrolliert austretendes Material aufkommen kann. Auch tritt bereits bei geringen Abständen der Schutzplatte von der Einspritzeinheit eine hohe Schutzwirkung ein, da ein Durchtritt von Material durch die Schutzplatte rasch unwahrscheinlich wird. Zudem ist eine Linearbewegung einfach und in kurzen Zeiten bewerkstelligbar. In diesem Zusammenhang ist zu bemerken, dass eine Schutzplatte nicht zwangsläufig planar sein muss, sondern dass hierunter ein im wesentlichen flächiges, aber nicht unbedingt ebenes Element verstanden wird. So kann eine Schutzplatte auch eine Wölbung oder andere Formen aufweisen.

Gemäß einer Ausgestaltung der Erfindung kann die Schutzplatte ein Düsensystem aufweisen, über das die Strömungsverbindung herstellbar ist. An dieses kann die Einspritzdüse der Einspritzeinheit unter Herstellung einer Strömungsverbindung von dieser zu einer Angussöffnung einer Form über das Düsensystem andockbar sein. Dies hat sich auch deshalb als vorteilhaft erwiesen, da ein eigenes Düsensystem derart ausgestaltbar ist, dass es mit der Angussöffnung der Form möglichst optimal zusammenpasst, wodurch unter anderem Leckagen zuverlässig vermeidbar sind. Des weiteren kann ein solches Düsensystem vorteilhafter Weise derart ausgestaltet sein, dass ein besonders günstiges Andocken der Einspritzdüse an das Düsensystem möglich ist. Dies kann beispielsweise durch Vorsehen einer entsprechenden, vorzugsweise im wesentlichen konischen Vertiefung gegeben sein, in die die Einspritzdüse einfach und im wesentlichen selbstjustierend einfahrbar ist, so dass eine dichtende Verbindung zwischen einer Austrittsöffnung der Einspritzdüse und einer Eingangsöffnung des Düsensystems gewährleistbar ist. Ein solches Düsensystem kann beispielsweise auch mehrere Einzeldüsen umfassen, die mit mehreren Angussöffnungen der Form überstimmen, wobei sich in dem Düsensystem eine Verzweigung für von der Einspritzeinheit durch die Einspritzdüse in das Düsensystem gespeistes Material befindet.

Bei einer erfindungsgemäßen Vorrichtung können Mittel vorgesehen sein, um die Schutzplatte gegenüber der nicht angedockten Einspritzeinheit zu beabstanden. Durch diese Mittel kann eine Beabstandung der Schutzplatte von der Einspritzeinheit in einem nicht angedockten Zustand sicherstellbar sein. Die Schutzplatte wirkt dann im wesentlichen nach Art einer Prallplatte für unkontrolliert austretendes, auf sie auftreffendes Material. Als Beabstandungsmittel können beispielsweise Druckzylinder oder ähnliche Mittel vorgesehen sein. Die Beabstandungsmittel können im wesentlichen symmetrisch zu einem Schmelzegang, insbesondere zu einer Symmetrieachse der Einspritzeinheit, angeordnet sein, oder aber beispielsweise nur asymmetrisch angreifen.

Gemäß einer besonders vorteilhaften Ausgestaltung der Erfindung können die Beabstandungsmittel als passives System ausgestaltet sein. Hierunter wird verstanden, dass eine automatische Beabstandung zwischen Einspritzeinheit und Schutzplatte in einem unbelasteten Zustand der Schutzplatte gewährleistbar ist. Dies ist insbesondere insofern vorteilhaft, als keine Ansteuerung vorzusehen ist, die eine Beabstandung der Schutzplatte von der Einspritzeinrichtung im nicht angedockten Zustand veranlasst. Hierdurch ist einerseits ein weitere Zeitersparnis durch Zykluszeitreduzierung erzielbar sowie eine zusätzliche Fehlerquelle ausschaltbar. Denn durch passive Beabstandungsmittel ist die Beabstandung der Schutzplatte von der Einspritzdüse in abgehobenem Zustand und somit die Funktionalität der Schutzplatte als Abschirmung des Bedienpersonals sicher gewährleistbar.

Die passiven Beabstandungsmittel können vorteilhaft durch den Andockvorgang selbst betätigbar sein, so dass die Schutzplatte bei einem Andocken der Einspritzeinheit an eine Angussöffnung einer Form an die Einspritzdüse der Einspritzeinheit derart herangefahren wird, dass eine Strömungsverbindung mit der Einspritzdüse herstellbar ist. Dies ist insbesondere dann günstig, wenn die Schutzplatte in Andockrichtung relativ zur Einspritzeinheit verschieblich gelagert ist. Bei einem Andockvorgang kann die Schutzplatte nach Kontakt mit der Form gegen die Stellkraft der passiven Beabstandungsmittel in Richtung der Einspritzeinheit verfahrbar sein. In vollständig angedocktem Zustand liegt die Schutzplatte bzw. gegebenenfalls deren Düsensystem an der Form an und zwischen der Einspritzdüse der Einspritzeinheit und der Schutzplatte ist eine Strömungsverbindung hergestellt, so dass Material durch die Angussöffnung der Form in eine Formkavität einspritzbar ist.

Besonders vorteilhafter Weise können die Beabstandungsmittel ein, insbesondere passiv ausgestaltetes, Druckfedersystem umfassen. Bei Druckfedern handelt es sich um mechanisch einfach aufgebaute, fehlertolerante Systeme, die zudem günstig und als Massenartikel erhältlich sind, wodurch die Vorrichtung besonders einfach und günstig betreibbar ist.

Bevorzugter Weise kann das Düsensystem der Schutzplatte eine Düsenaufnahme und eine in diese Düsenaufnahme eingeschraubte Einschraubdüse umfassen. Dies ist vorteilhaft, da es sich hierbei um standardmäßig erhältliche Bauteile handelt, die vorkonfektioniert und in verschiedenen Größen beziehbar sind, wodurch das Düsensystem leicht und flexibel an beliebige Einspritzdüsen und Angussöffnungen bzw. Formen anpassbar ist. Die modulare Bauweise erleichtert zudem die Betreibbarkeit der Vorrichtung mit unterschiedlichen Formen, die verschieden dimensionierte Angussöffnungen aufweisen.

Besonders vorteilhafter Weise kann das Düsensystem der Schutzplatte beheizbar ausgestaltet sein. Dies bietet sich gerade bei der Verarbeitung von thermoplastischem Material oder auch von Metallschmelzen an, wobei bevorzugt eine separate Ansteuerung der Heizvorrichtung gegeben sein kann. Alternativ kann bei einer Verarbeitung von Duroplasten auch ein Kühlsystem für das Düsensystem vorgesehen sein. In einer vorteilhaften Ausgestaltung ist an dem Düsensystem ein Heizband vorgesehen, das leicht an die jeweilige Düsenform anpassbar und einfach betreibbar ist, sowie einen geringen Platzbedarf aufweist. Ein solches Heizband kann vorzugsweise mit einem integrierten Thermofühler versehen sein, der die separate Ansteuerbarkeit weiter erleichtert.

Bei der erfindungsgemäßen Vorrichtung kann gemäß einer vorteilhaften Ausgestaltung die Schutzeinrichtung an einer Düseneinrichtung der Einspritzeinheit, die die Einspritzdüse umfasst, befestigt sein. Durch eine solche Anbringung der Schutzeinrichtung in Nähe der Einspritzdüse ist eine relativ kompakte Ausgestaltung der Schutzeinrichtung und der Vorrichtung als ganzes gewährleistbar. Zudem können im Falle nichtsymmetrischer Anbringung nur relativ kleine Hebelmomente auftreten, und auch bei symmetrischer Anbringung lässt sich eine kleine Gesamtausdehnung gewährleisten. Vorzugsweise kann die Schutzeinrichtung über Winkelelemente oder ähnliche Befestigungsmittel an der Düseneinrichtung befestigbar sein. Vorteilhaft kann eine Minimierung des Wärmeflusses von der im allgemeinen beheizten Düseneinrichtung der Einspritzeinheit zu der Schutzeinrichtung durch die Befestigung über Elemente geringer Materialstärke erfolgen.

Bei einer erfindungsgemäßen Vorrichtung kann ein elektrischer Näherungsschalter zur Überwachung vorgesehen sein. Mittels diesem kann überwacht werden, ob in einem abgedockten Zustand eine Beabstandung zwischen Schutzplatte und Einspritzdüse vorliegt. Bevorzugt kann der Näherungsschalter direkt die Bewegung der Schutzplatte überwachen und beispielsweise im Bereich von Beabstandungsmitteln vorgesehen sein. Hierdurch kann ein im Störfalle auftretendes Verklemmen der Schutzplatte gegenüber der Einspritzeinheit oder eine ähnliche Fehlfunktion detektierbar sein.

Die erfindungsgemäße Vorrichtung kann besonders vorteilhaft rein mechanisch betreibbar sein, wodurch ein noch höherer Schutz durch die Schutzeinrichtung gewährleistbar ist. Gleichzeitig ist durch die Schutzeinrichtung mit ihrer Schutzplatte eine doppelte Funktion bereitstellbar, da sie einerseits dem Schutz des Bedienpersonals vor unbeabsichtigt austretendem Material dienen kann als auch als Prallplatte für das kontrollierte Abspritzen von überschüssigem Material beispielsweise im Fall von Materialwechseln. In diesen Fällen befindet sich die Einspritzeinheit in einem abgehobenen Zustand, die Schutzplatte ist von der Einspritzeinheit und ihrer Düse beabstandet und bei einem Austreten oder Abspritzen von Material wird dieses von der Schutzplatte im wesentlichen nach unten abgelenkt. Hierbei sind die in der Schutzplatte zur Herstellung einer Strömungsverbindung im angedockten Zustand vorgesehene Durchtrittsöffnung oder das entsprechende Düsensystem derart dimensioniert, dass im wesentlichen nur bei direktem Kontakt mit der Einspritzdüse ein Durchtritt von Material ermöglicht ist. Somit wirkt die Schutzplatte in diesen Fällen als Prallplatte, von der das ausgespritzte Material abprallt und in einen Maschineneinbauraum oder in dort vorzugsweise vorzusehende Materialauffangbehälter abgelenkt wird.

So könnte auch zusätzlich eine Wanne zum Aufnehmen von abgespritztem Material direkt an der Schutzplatte und hier bevorzugt in einem unteren Bereich derselben anordenbar sein. Nach einem solchen Abspritzen ist die Schutzplatte leicht zu reinigen und in einem nächsten Einspritzschritt kann erneut ein Andocken der Einspritzeinheit unter Zwischenschaltung der Schutzplatte erfolgen.

Ebenso wird die gestellte Aufgabe durch eine Schutzeinrichtung zur Verwendung insbesondere bei einer vorbeschriebenen Vorrichtung gelöst, die ein Grundelement und eine relativ zu diesem beweglich gelagerte Schutzplatte umfasst, wobei die Schutzplatte erfindungsgemäß ein Düsensystem aufweist. Durch das Vorsehen des Düsensystems kann eine solche Schutzplatte eine zwischengeschaltete Stellung auch bei einem Einspritzvorgang einnehmen, was sich aufgrund der Einfachheit der vorzusehenden Mechanik, der großen Ausfallsicherheit und der hohen Schutzwirkung als besonders vorteilhaft erwiesen hat. Unter Düsensystem kann hierbei auch eine Durchtrittsöffnung als einfachste Ausgestaltung einer Düse verstanden werden.

Vorteilhafter Weise sind Mittel vorgesehen, um die Schutzplatte gegenüber dem Grundelement zu beabstanden. Ein solches Grundelement kann beispielsweise als Tragrahmen ausgestaltet sein, an dem sich einerseits die Beabstandungsmittel abstützen können, an dem aber auch Befestigungsmittel anbringbar sein können, um die Schutzeinrichtung mit anderen Elementen, beispielsweise einer Einspritzeinheit oder einer Form, verbindbar zu machen. Das Grundelement kann auch zwei- oder mehrteilig ausgestaltet sein, um eine symmetrische Anbringung der Schutzeinrichtung beispielsweise an einer Einspritzeinheit zu ermöglichen.

Besonders vorteilhafter Weise können die Beabstandungsmittel als passives System ausgebildet sein, worunter ein automatisches Einnehmen eines beabstandeten Zustands zwischen Grundelement und Schutzplatte bei Fehlen von äußerem Zwang verstanden wird. Es ist also Kraft aufzuwenden, um die Beabstandung zu verringern. Hierdurch kann die Schutzfunktion einer solchen Schutzeinrichtung besonders einfach gewährleistet werden.

Bevorzugter Weise können die Beabstandungsmittel ein Druckfedersystem umfassen, wobei ein Druckfedersystem eine oder mehrere Druckfedern umfassen kann. Diese können einerseits an dem Grundelement und andererseits an der Schutzplatte oder an mit dieser verbundenen Elementen angreifen. Bei Druckfedern handelt es sich um mechanisch einfache, wenig fehleranfällige und standardmäßig erhältliche Bauteile.

Des weiteren können die Beabstandungsmittel mindestens einen Bolzen umfassen, an dem die Schutzplatte anordenbar ist. So kann beispielsweise der Bolzen unter Zwischenschaltung eines Druckfedersystems mit dem Grundelement verbindbar sein. Für ein solchen Bolzen oder ähnliche Elemente können Führungsvorrichtungen vorgesehen sein, um eine leichte Beweglichkeit der Schutzplatte relativ zum Grundelement zu gewährleisten und ein Verkanten oder ähnliches effektiv zu vermeiden.

Vorteilhafter Weise kann ein Gehäuse vorgesehen sein, das die Beabstandungsmittel zumindest teilweise aufnimmt. Durch ein solches Gehäuse kann eine Verschmutzung im Betrieb im wesentlichen verhindert werden, und eine sichere Lagerung der Beabstandungsmittel bzw. der Schutzplatte relativ zu dem Grundelement ist gewährleistbar. Im Falle einer beabsichtigten symmetrischen Anbringung kann auch ein solches Gehäuse zwei- oder mehrteilig ausgebildet sein, so dass beispielsweise ein Gehäuseteil jeweils einen Teil des Grundelements, einen Bolzen und eine Druckfeder zumindest teilweise aufnimmt.

Bevorzugter Weise kann das Düsensystem der Schutzplatte eine Düsenaufnahme und eine Einschraubdüse umfassen, wodurch die Spezifikation des Düsensystems einfach an die jeweiligen Anforderungen anpassbar ist und beispielsweise eine Betreibbarkeit mit wechselnden Einspritzeinheiten und Angussöffnungen von Formen gewährleistbar ist. Durch diese Variabilität des Düsensystems ist gerade auch eine leichte Nachrüstbarkeit der Schutzeinrichtung gewährleistbar.

Bevorzugter Weise ist das Düsensystem beheizbar, es kann jedoch auch bei Verarbeitung von beispielsweise duroplastischen Medien mit einer Kühleinrichtung ausgestattet sein.

An dem Düsensystem kann ein platzsparendes und einfach betreibbares Heizband vorgesehen sein, das vorzugsweise einen integrierten Thermofühler aufweisen kann. So kann eine separate Temperierbarkeit des Düsensystems in Abhängigkeit von gemessenen Werten bereitstellbar sein.

Auch kann ein elektrischer Näherungsschalter, insbesondere im Bereich des Gehäuses, vorgesehen sein. Mithilfe desselben kann der Abstand von dem Gehäuse bzw. dem Grundelement, an dem das Gehäuse vorteilhafter Weise befestigt ist, zu naheliegenden Begrenzungen, wie beispielsweise einer Form oder aber auch zu der Schutzplatte, messbar sein. Alternativ kann der Näherungsschalter beispielsweise auch die Bewegung der Beabstandungsmittel überwachen, um die Bewegung der Schutzplatte zu kontrollieren. Über die erhobenen Messwerte kann eine fehlerfreie Funktion der Schutzeinrichtung gewährleistbar sein, indem ein Fehlersignal bei nichtstimmigen Messwerten ausgebbar ist, wobei gegebenenfalls auch ein Abgleich mit anderweitig erhobenen Messwerten möglich ist.

Eine erfindungsgemäße Schutzeinrichtung kann des weiteren Befestigungsmittel aufweisen, die bevorzugt an dem Grundelement anbringbar sind und über die eine Befestigung an weiteren Elementen, beispielsweise an einer Einspritzeinheit und insbesondere an deren Düseneinrichtung, ermöglichbar ist. Solche Befestigungsmittel können beispielsweise nach Art von Winkelblechen ausgestaltet sein, wodurch eine geringe Wärmekopplung zwischen den verschiedenen Elementen gewährleistbar ist.

Im Bereich der Schutzplatte kann eine Wanne anordenbar sein, um im Betrieb abtropfendes bzw. gegen die Schutzplatte abgespritztes Material auffangbar zu machen.

Gemäß einer besonders vorteilhaften Ausgestaltung der vorliegenden Erfindung kann die Schutzplatte verchromt sein. Von einer verchromten Schutzplatte lassen sich Rückstände, wie beispielsweise ausgehärtetes Kunststoffmaterial, leicht entfernen, auch ist durch die Wärmeleitfähigkeit ein schnelles Abkühlen der Rückstände sichergestellt und eine saubere und sichere Funktionsweise ist gewährleistbar.

Die vorliegende Erfindung bezieht sich auch auf ein Verfahren zum Betreiben einer Vorrichtung zum Einspritzen, das besonders vorteilhaft auch für ein Einspritzen in ein Werkzeug mit einer Einspritzeinheit in L- oder V-Stellung verwendbar ist.

Ein solches Verfahren zum Betreiben einer Vorrichtung zum Einspritzen, mit einer Einspritzeinheit und einer Schutzeinrichtung, die eine Schutzplatte umfasst, bei dem die Schutzplatte bei einem Andockvorgang relativ zu der Einspritzeinheit verfahren und in einem abgehobenen Zustand beabstandet zur Einspritzeinheit angeordnet wird, und bei dem die Einspritzeinheit und die Schutzplatte im angedockten Zustand eine Strömungsverbindung bilden, löst ebenfalls die gestellte Aufgabe. Ein solches Verfahren kann insbesondere zum Betreiben einer zuvor beschriebenen Vorrichtung dienen.

Bei diesem Verfahren wird die Schutzplatte derart vor der Einspritzeinheit angeordnet, dass Bedienpersonal vor Schaden durch unkontrolliert austretendes Material aus der Einspritzeinheit geschützt wird. Bei einem Andockvorgang wird die Einspritzeinheit in eine Einspritzposition gebracht, in dieser Position kann die Einspritzeinheit oder eine Einspritzdüse derselben derart mit einer Angussöffnung einer Form kooperieren, dass eine Strömungsverbindung zwischen der Einspritzdüse und einer Formkavität der Form hergestellt wird. Bei dem Andockvorgang wird die Schutzplatte erfindungsgemäß also derart relativ zur Einspritzeinheit verfahren, dass sie im angedockten Zustand mit der Einspritzeinheit eine Strömungsverbindung bildet. Mittels dieser Strömungsverbindung kann beispielsweise plastifiziertes Material aus der Einspritzeinheit in eine Formkavität eingespritzt werden.

In einem abgehobenen Zustand der Einspritzeinheit und bevorzugt bereits während eines Abhebens derselben von der Form hingegen wird die Schutzplatte von der Einspritzeinheit beabstandet. Sie wird dann also so angeordnet, dass ein gewisser Zwischenraum zwischen Einspritzeinheit und Schutzplatte besteht. Vorteilhaft hieran ist, dass die Schutzplatte im wesentlichen nicht aus der Einspritzrichtung bzw. Andockrichtung der Einspritzeinheit herausverfahren werden muss, sondern in dieser verbleiben kann, so dass unkontrolliert austretendes Material auf die Schutzplatte auftrifft und dann von dieser abtropft. Das Abtropfen erfolgt in einen Bereich der Maschine, der dem Bedienpersonal im Betrieb nicht direkt zugänglich ist. Somit kann zu keinem Zeitpunkt eine wesentliche Gefährdung einer Bedienposition auftreten. Zudem können so einfache, im wesentlichen lineare Verfahrbewegung gewährleistet werden, die sich ihrerseits in kurzen Zykluszeiten und geringer Fehleranfälligkeit niederschlagen.

Besonders vorteilhafter Weise kann die Strömungsverbindung mittels eines Düsensystems hergestellt werden, das in der Schutzplatte vorgesehen ist. Auf diese Weise kann eine besonders sichere Strömungsverbindung hergestellt werden, die nur geringe Leckagegefahr aufweist, da durch ein zwischengeschaltetes Düsensystem eine besonders gute Andockbarkeit einerseits der Einspritzeinheit an das Düsensystem und andererseits des Düsensystems an eine Angussöffnung einer Form gewährleistet werden kann. Vorteilhaft ist des weiteren, dass ein solches Düsensystem aus Standardkomponenten aufgebaut werden kann, so dass eine einfache, technische Nachrüstbarkeit sowie Anpassbarkeit an unterschiedliche Anforderungen gegeben ist.

Gemäß einer bevorzugten Ausgestaltung des Verfahrens zum Betreiben einer Vorrichtung zum Einspritzen beabstandet sich die Schutzplatte bei einem Abheben der Einspritzeinheit von einer Form automatisch von der Einspritzeinheit. Durch diese automatische Beabstandung kann in jedem Verfahrensschritt ein wirksamer Schutz des Bedienpersonals sichergestellt werden, da sich die Schutzplatte beim Abheben im wesentlichen sofort von der Einspritzeinheit beabstandet und so als Schutzschildes fungiert, das das Bedienpersonal von einer Austrittsöffnung der Einspritzeinheit abschirmt. Die Dimensionierung des Düsensystems der Schutzplatte ist derart gewählt, dass aufgrund der automatischen Beabstandung ein eventueller Durchtritt von ausgespritztem Material durch das Düsensystem de facto ausgeschlossen werden kann.

Bevorzugter Weise wird bei dem erfindungsgemäßen Verfahren ein Näherungsschalter eingesetzt, der misst, ob die Schutzplatte von der Einspritzeinheit beabstandet ist. Wenn die Einspritzeinheit nicht an einer Form angedockt ist und die Schutzplatte gleichzeitig nicht von der Einspritzeinheit beabstandet ist, wird eine Fehlermeldung erzeugt, da dann keine ausreichende Schutzwirkung für das Bedienpersonal durch die Schutzplatte gegeben ist. Die Verarbeitung der aufgenommenen Signale sowie die Ausgabe des Alarms werden bevorzugt von einer Steuerungseinrichtung vorgenommen. Ein solcher oder weitere Näherungsschalter können auch weitere Aufgaben erfüllen. Er kann beispielsweise genauere Informationen über den Abstand der Einspritzeinheit von der Form liefern, die von der Steuerung zur exakten Ansteuerung der Einspritzeinheit oder ähnlichem eingesetzt werden können.

Besonders vorteilhafter Weise kann die Schutzplatte im abgehobenen Zustand zugleich als eine Art Prallplatte dienen, gegen die überschüssiges Material kontrolliert abgespritzt werden kann. Überschüssiges Material kann in einer Einspritzeinheit beispielsweise vor einem Materialwechsel oder aber nach längerem Wartezeiten, die oft mit Degradation des Materials einhergehen, vorhanden sein. Vorteilhaft hieran ist, dass keine separate Prallplatte vor der Austrittsöffnung der Einspritzeinheit angebracht werden muss, sondern dass die bereits vorhandene Schutzplatte, die die Sicherheit des Bedienpersonals gewährleistet, doppelt genutzt werden kann. Das solchermaßen kontrolliert gegen die Schutzplatte abgespritzte Material kann unterhalb dieser in geeigneten Behältern aufgefangen werden oder aber auch nur in den Maschinenraum abtropfen.

Vor einem neuerlichen Einspritzvorgang kann die Schutzplatte einfach beispielsweise von Rückständen gereinigt werden, so dass im angedockten Zustand wieder eine Strömungsverbindung zwischen Einspritzeinheit und Schutzplatte hergestellt und Material in eine Formkavität eingespritzt werden kann.

Mittels der erfindungsgemäßen Vorrichtung bzw. des erfindungsgemäßen Verfahrens lässt sich auf einfache Weise ein effektiver Schutz des Bedienpersonals sicherstellen bei gleichzeitig sehr geringer Fehleranfälligkeit. Zusätzlich zeichnet sich die Schutzvorrichtung durch einfachen Aufbau aus, ist wartungsarm und kann kostengünstig bereitgestellt werden, insbesondere ist sie auch leicht bei bereits im Betrieb befindlichen Einspritzeinheiten nachrüstbar. Zudem ist sie zeitoptimal im Betrieb, da kein Zeitpolster für einen Ausschwenkvorgang der Schutzplatte, die durchgängig vor der Einspritzeinheit verbleibt, vorgesehen werden muss. Die Schutzplatte trägt sozusagen eine frei schwebende Düse, die beim Andocken an die Einspritzdüse der Einspritzeinheit herangefahren wird.

Alternativ ist es auch denkbar, dass eine erfindungsgemäße Schutzplatte in gewissen Konstellationen an einer Form und nicht an einer Einspritzeinheit gehaltert werden kann.

Ein Ausführungsbeispiel der vorliegenden Erfindung soll anhand der folgenden Figuren noch näher erläutert werden. Es zeigen:
- **Fig. 1**:: eine erfindungsgemäße Vorrichtung zum Einspritzen in der Seitenansicht,
- **Fig. 2**:: einen Ausschnitt einer solchen Vorrichtung in einer Frontansicht,
- **Fig. 3**:: einen Ausschnitt einer solchen Vorrichtung in der Draufsicht,
- **Fig. 4**:: eine alternative Vorrichtung zum Einspritzen in der Schnittdarstellung von der Seite, und
- **Fig. 5**:: diese Vorrichtung in einer Schnittdarstellung von oben.

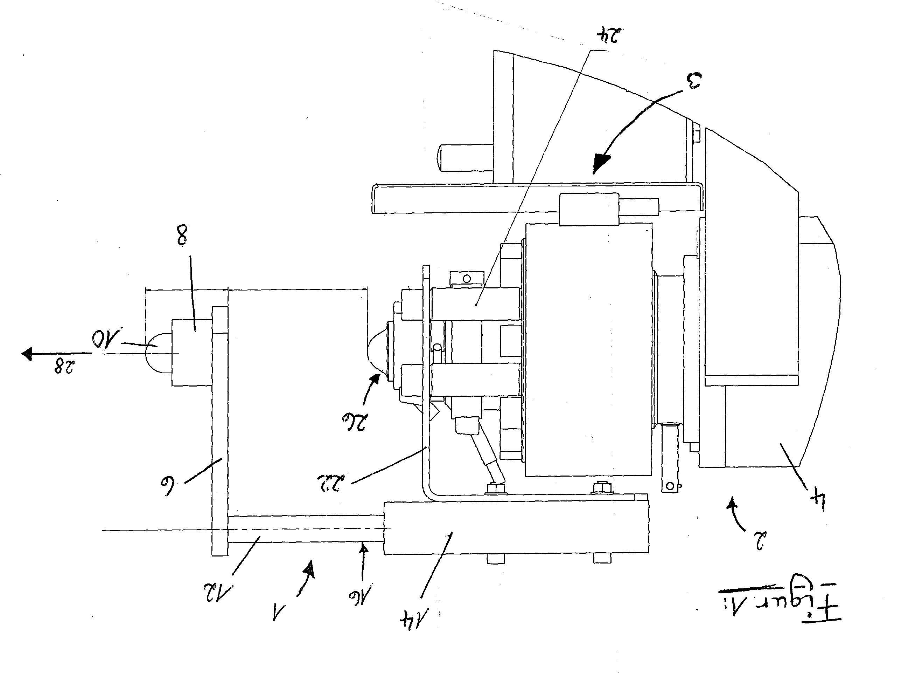

Die Fig. 1 zeigt eine Vorrichtung zum Einspritzen mit einem vorderen Teil einer Einspritzeinheit 2, der in einer Düseneinrichtung 3 endet. Diese Düseneinrichtung 3 umfasst eine Einspritzdüse 26, durch die beispielsweise im Falle von Kunststoffspritzguss plastifiziertes Material aus der Einspritzeinheit ausgespritzt werden kann. An der Düseneinrichtung 3 ist eine Schutzeinrichtung 1 mittels Befestigungsmitteln 22 und Abstandselementen 24 angebracht. Die Schutzeinrichtung 1 weist eine Schutzplatte 6 auf, an der ein Düsensystem mit einer Düsenaufnahme 8 und einer Einschraubdüse 10 vorgesehen ist, das mit der Einspritzdüse 26 der Einspritzeinheit 2 zur Deckung bringbar ist. Die Schutzplatte 6 weist Beabstandungsmittel 16 auf, die Bolzen 18 umfassen und für eine Beabstandung der Schutzplatte 6 gegenüber einem Gehäuse 14 sorgen. Die Bolzen 18 sind in dem Gehäuse 14 beweglich gelagert und relativ zu diesem entgegen der Pfeilrichtung 28 verschiebbar. Die Befestigungsmittel 22 greifen an dem Gehäuse 14 an. Durch die Verwendung von Befestigungsmitteln 22 mit geringem Durchmesser kann die Schutzeinrichtung 1 thermisch von der im Falle der Verarbeitung von thermoplastischen Materialien beheizten Düseneinrichtung 3 im wesentlichen entkoppelt werden.

Die Fig. 1 zeigt die Einspritzeinheit 2 in abgehobenem Zustand, d. h. dass sie nicht an eine nicht näher dargestellte Angussöffnung einer Form einer Spritzgießmaschine angedockt ist. Aus diesem Grund ist die Schutzplatte 6 aufgrund der Beabstandungsmittel 16 von der Einspritzdüse 26 beabstandet, so dass eventuell unkontrolliert austretendes Material an der Schutzplatte 6 abprallt und von dieser im wesentlichen senkrecht in den Maschinenraum abtropft.

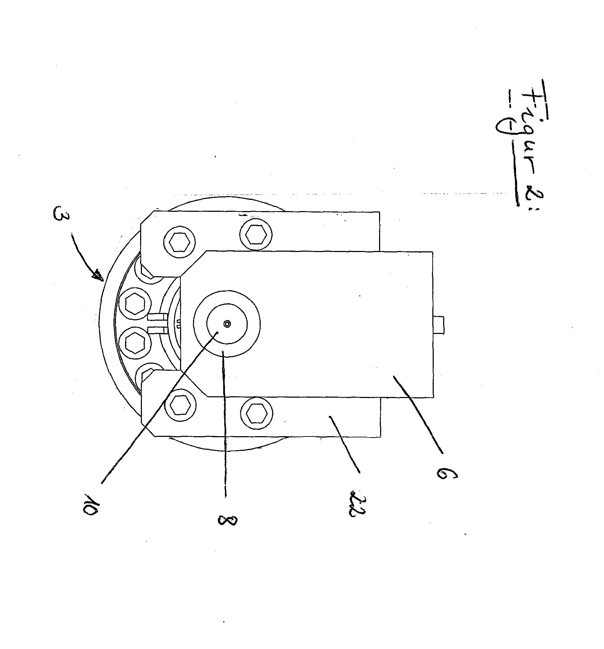

Fig. 2 zeigt die Vorrichtung zum Einspritzen von vorne. Die Schutzplatte 6 mit der Düsenaufnahme 8 und der Einschraubdüse 10 verdeckt die Einspritzdüse 26 der Einspritzeinheit 2. An einer Düseneinrichtung 3 sind die Befestigungsmittel 22 angebracht, die die Schutzeinrichtung 1 mit der Schutzplatte 6 tragen. Aus dieser Darstellung ist klar ersichtlich, dass die Schutzplatte 6 ein effektives Schutzschild für Bedienpersonal darstellt, das im wesentlichen frontal auf die Einspritzeinheit 2 blickt, wie dies insbesondere beim Mehrkomponenten-Spritzguss mit beispielsweise horizontal im rechten Winkel zur Schließeinheit angeordneten Einspritzeinheiten häufig auftritt.

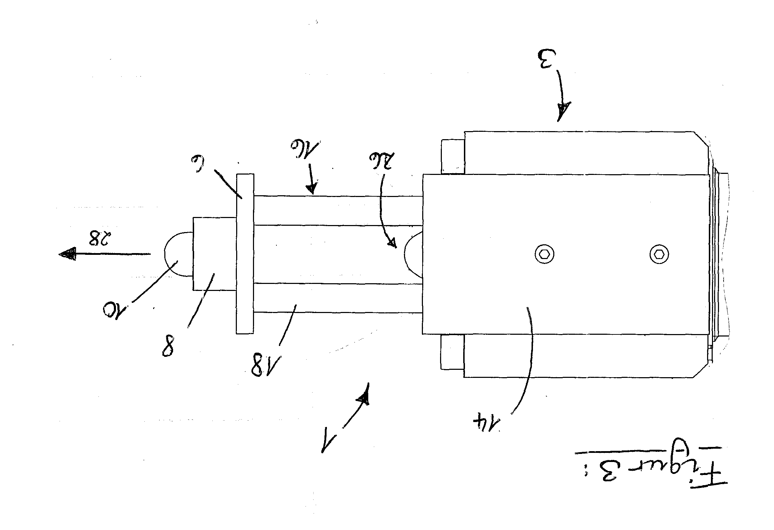

Fig. 3 zeigt die erfindungsgemäßen Vorrichtung im nicht angedockten Zustand in der Draufsicht. Die Schutzeinrichtung 1 ist oberhalb der Düseneinrichtung 3 der Einspritzeinheit 2 gehaltert. Die Einspritzdüse 26 ist vom Düsensystem der Schutzplatte 6 mit Düsenaufnahme 8 und Einschraubdüse 10 beabstandet. Die Beabstandung der Schutzplatte 6 von der Düseneinrichtung 3 erfolgt über Beabstandungsmittel 16, die Bolzen 18 umfassen. Diese können beispielsweise durch ein im Gehäuse 14 aufgenommenes, nicht näher dargestelltes Druckfedersystem in ausgefahrener Stellung gehalten werden.

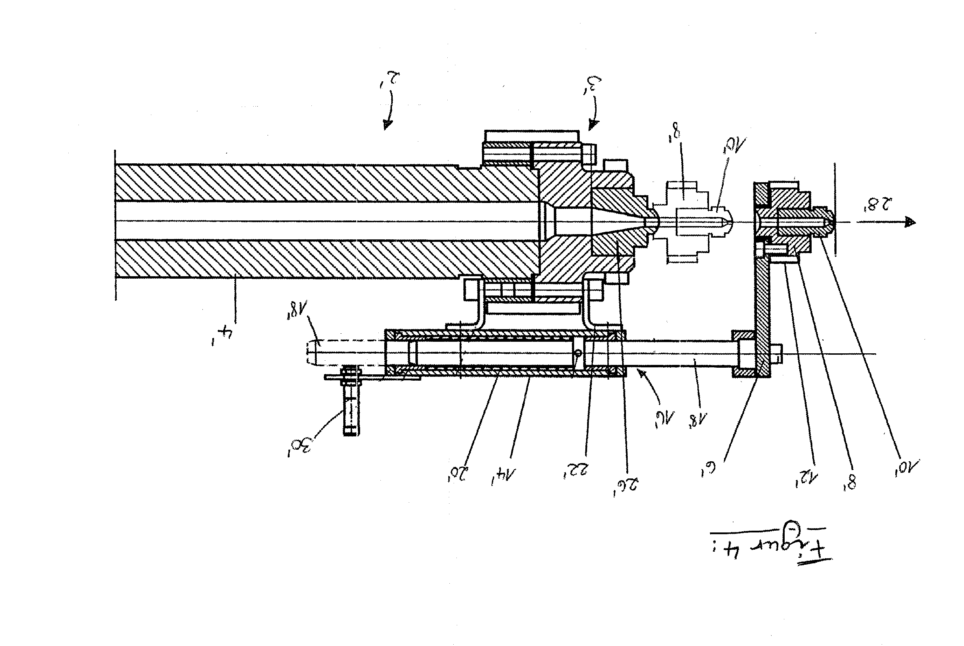

Fig. 4 zeigt eine alternative Vorrichtung zum Einspritzen in der Schnittdarstellung von der Seite. Elemente, die den bereits in den Figuren 1 bis 3 gezeigten Elementen entsprechen, sind mit entsprechenden, gestrichenen Bezugszeichen bezeichnet. In der Schnittdarstellung erkennt man die Funktionsweise der Beabstandungsmittel 16'. Durch eine Druckfeder 20' werden Bolzen 18' gegenüber dem Gehäuse 14' mit Druck beaufschlagt, so dass die Schutzplatte 6' im drucklosen, also abgehobenen, Zustand automatisch eine vom Gehäuse 14' beabstandete Position einnimmt. Das Düsensystem mit Düsenaufnahme 8' und Einschraubdüse 10' der Schutzplatte 6' ist separat beheizbar und weist gemäß dieser Ausführungsform ein Heizband 12' mit integriertem Thermofühler auf. Zusätzlich ist in Fig. 4 schematisch die Position des Düsensystems mit Düsenaufnahme 8' und Einschraubdüse 10' in einem angedockten Zustand dargestellt. Die Bolzen 18' sind entsprechend nach hinten verschoben. Ein Näherungsschalter 30' ist zur Überwachung der Position der Schutzplatte 6' am Gehäuse 14' angeordnet. Der Näherungsschalter 30' wirkt hierbei mit zumindest einem der Bolzen 18' zusammen.

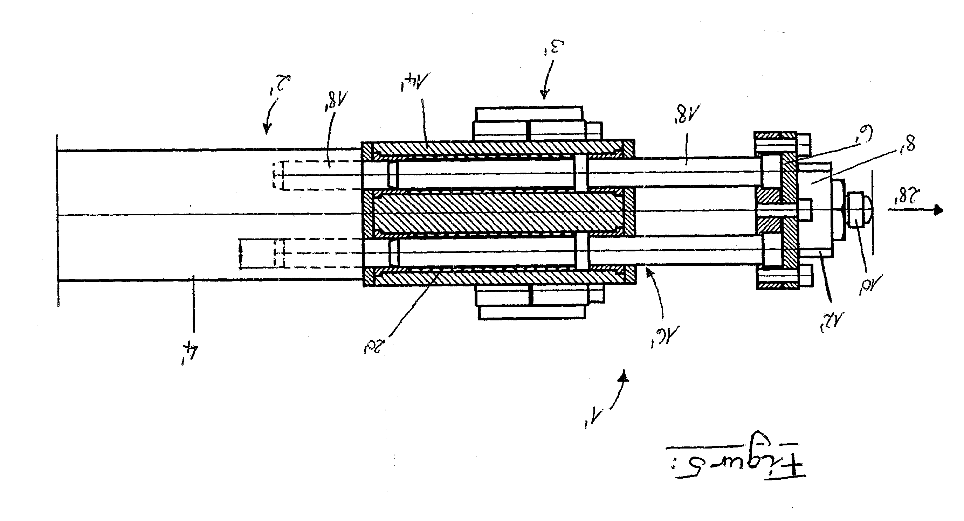

In Fig. 5 ist ein horizontaler Schnitt durch die Schutzvorrichtung 1' gemäß Fig. 4 gezeigt, wobei die Einspritzdüse 26' nicht näher dargestellt ist. Auch hier sind die Bolzen 18' in ihrer Lage im abgehobenen sowie strichpunktiert im angedockten Zustand gezeigt. Wieder ist ersichtlich, wie sich die Beabstandungsmittel 16' mit Bolzen 18' und Druckfedern 20' gegen das Gehäuse 14' abstützen.

Bei einem Andocken der Einspritzeinheit 2, 2' an eine nicht näher dargestellte Angussöffnung einer Form wird die Einspritzeinheit 2, 2' in Richtung der Angussöffnung verfahren, in den Fig. 1 und 3 ist dies durch den Pfeil 28, in den Fig. 4 und 5 durch den Pfeil 28' dargestellt. Sobald das Düsensystem der Schutzplatte 6, 6' auf die Angussöffnung trifft, wird die Schutzplatte 6, 6' aufgrund der fortwährenden Andockbewegung der Einspritzeinheit 2, 2' relativ zu derselben entgegen der Rückstellkraft der Beabstandungsmittel 16, 16' verschoben, bis die Einspritzdüse 26, 26' ihrerseits an eine entsprechend geformte Angussposition des Düsensystems der Schutzplatte 6, 6' andockt. Dies ist besonders gut ersichtlich aus Fig. 4, in der Andockzustand schematisch dargestellt ist. Zwischen Düsenaufnahme 8' und Einspritzdüse 26' ist hier eine Strömungsverbindung hergestellt. Über diese Strömungsverbindung kann Material von der Einspritzeinheit 2, 2' über die Einspritzdüse 26, 26' und das Düsensystem der Schutzplatte 6, 6' mit Düsenaufnahme 8, 8' und Einschraubdüse 10, 10' über die Angussöffnung der Form in eine in der Form vorgesehene Formkavität eingespritzt werden. Je nach Andockposition an der Form kann die Einspritzeinheit 2, 2' bei aufeinanderfolgenden Einspritzvorgängen angedockt bleiben oder aber zwischen jedem einzelnen Einspritzvorgang abgehoben werden.

Im Falle eines Abhebens wird aufgrund der passiven Beabstandungsmittel 16, 16' die Schutzplatte 6, 6' sofort von der Einspritzeinheit 2, 2' beabstandet, sie bleibt dabei solange an der Form anliegen, bis die Bolzen 18, 18' der Beabstandungsmittel 16, 16' vollständig ausgefahren sind, erst dann findet auch eine Abhebbewegung der Schutzplatte 6, 6' bzw. ihrer Einschraubdüse 10, 10' von der Angussöffnung der Form statt. So ist ein wirkungsvolles Funktionieren der Schutzplatte 6, 6' bereits in den ersten Momenten nach Abheben der Einspritzeinheit 2, 2' gewährleistet, da bereits dann ein Abstand zwischen Schutzplatte 6, 6' und Einspritzeinheit 2, 2' gegeben ist, so dass unkontrolliert aus der Einspritzdüse 26, 26' austretendes Material an der Schutzplatte 6, 6' abprallt, und das Düsensystem nicht mehr durchdringen kann.

Vorteilhaft ist weiter, dass im beabstandeten Zustand die Schutzplatte 6, 6' als Prallplatte für ein kontrolliertes Abspritzen heißer Formmasse genutzt werden kann.

Durch die Verwendung einer solchermaßen federbelasteten Schutzplatte 6, 6' kann ein effektiver Schutz des Bedienpersonals zu jeder Zeit unabhängig von Steuerungsvorgängen gewährleistet werden, da ein sicheres Funktionieren durch Verwendung von passiven, d. h. automatisch wirkenden Beabstandungsmitteln 16, 16', wie beispielsweise Druckfedern 20', auch in stromlosem Zustand garantiert ist.

Die erfindungsgemäße Vorrichtung, die Schutzplatte 6, 6' und das Verfahren zeichnen sich durch einen hohen Grad an Sicherheit für das Bedienpersonal bei gleichzeitig sehr geringer Ausfallwahrscheinlichkeit aufgrund einfachen mechanischen Aufbaus aus und ermöglichen es zudem, eine bewusste und kontrollierte Entleerung der Einspritzeinheit 2, 2' durchzuführen, wodurch kein Einsperren der Formmasse in der Einspritzeinheit 2, 2' wie bei Vorrichtungen aus dem Stand der Technik erforderlich ist.

### Bezugszeichenliste

- 1, 1': Schutzeinrichtung
- 2, 2': Einspritzeinheit
- 3, 3': Düseneinrichtung
- 4, 4': Einspritzzylinder
- 6, 6': Schutzplatte
- 8, 8': Düsenaufnahme
- 10, 10': Einschraubdüse
- 12': Heizband
- 14, 14': Gehäuse
- 16, 16': Beabstandungsmittel
- 18, 18': Bolzen
- 20': Druckfeder
- 22, 22': Befestigungsmittel
- 24: Abstandselement
- 26, 26': Einspritzdüse
- 28, 28': Andockrichtung
- 30': Näherungsschalter

## Patentansprüche

1. Vorrichtung zum Einspritzen mit einer Einspritzeinheit (2, 2'), die eine Einspritzdüse umfasst, und einer Schutzeinrichtung (1, 1'), die an der Einspritzeinheit (2, 2') angeordnet ist und eine relativ zur Einspritzeinheit (2, 2') beweglich gelagerte Schutzplatte aufweist,
**dadurch gekennzeichnet, dass**
die Schutzplatte (6, 6') derart ausgestaltet ist, dass bei einem Andocken der Einspritzeinheit (2, 2') an eine Angussöffnung einer Form unter Zwischenschaltung der Schutzplatte (6, 6') eine Strömungsverbindung mit der Einspritzdüse (26, 26') herstellbar ist.

2. Vorrichtung nach Anspruch 1,
**dadurch gekennzeichnet, dass**
die Schutzplatte (6, 6') in Andockrichtung (28, 28') relativ zur Einspritzeinheit (2, 2') verschieblich gelagert ist.

3. Vorrichtung nach Anspruch 1 oder 2,
**dadurch gekennzeichnet, dass**
die Schutzplatte (6, 6') ein Düsensystem aufweist, über das die Strömungsverbindung herstellbar ist.

4. Vorrichtung nach einem der Ansprüche 1 - 3,
**dadurch gekennzeichnet, dass**
Mittel vorgesehen sind, um die Schutzplatte (6, 6') gegenüber der nicht angedockten Einspritzeinheit (2, 2') zu beabstanden.

5. Vorrichtung nach Anspruch 4,
**dadurch gekennzeichnet, dass**
die Beabstandungsmittel (16, 16') als passives System ausgestaltet sind.

6. Vorrichtung nach Anspruch 4 oder 5,
**dadurch gekennzeichnet, dass**
die Beabstandungsmittel (16, 16') ein Druckfedersystem umfassen.

7. Vorrichtung nach einem der Ansprüche 3 - 6,
**dadurch gekennzeichnet, dass**
das Düsensystem eine Düsenaufnahme (8, 8') und eine Einschraubdüse (10, 10') umfasst.

8. Vorrichtung nach einem der Ansprüche 3 - 7,
**dadurch gekennzeichnet, dass**
das Düsensystem beheizbar ist.

9. Vorrichtung nach einem der Ansprüche 3 - 8,
**dadurch gekennzeichnet, dass**
an dem Düsensystem ein Heizband, vorzugsweise mit einem integrierten Thermofühler, vorgesehen ist.

10. Vorrichtung nach einem der Ansprüche 1 - 9,
**dadurch gekennzeichnet, dass**
ein elektrischer Näherungsschalter (30') vorgesehen ist.

11. Vorrichtung nach einem der Ansprüche 1 - 10,
**dadurch gekennzeichnet, dass**
die Schutzeinrichtung (1, 1') an einer Düseneinrichtung (3, 3') der Einspritzeinheit (2, 2') befestigt ist.

12. Vorrichtung nach einem der Ansprüche 1-11,
**dadurch gekennzeichnet, dass**
an der Schutzplatte (6, 6') eine Wanne zum Aufnehmen von abgespritztem Material anordenbar ist.

13. Schutzeinrichtung zur Verwendung insbesondere bei einer Vorrichtung nach einem der Ansprüche 1 - 12, mit einem Grundelement und einer relativ zu diesem beweglich gelagerten Schutzplatte (6, 6'),
**dadurch gekennzeichnet, dass**
die Schutzplatte (6, 6') ein Düsensystem aufweist.

14. Schutzeinrichtung nach Anspruch 13,
**dadurch gekennzeichnet, dass**
Mittel vorgesehen sind, um die Schutzplatte (6, 6') gegenüber dem Grundelement zu beabstanden.

15. Schutzeinrichtung nach Anspruch 14,
**dadurch gekennzeichnet, dass**
die Beabstandungsmittel (16, 16') als passives System ausgebildet sind.

16. Schutzeinrichtung nach Anspruch 14 oder 15,
**dadurch gekennzeichnet, dass**
die Beabstandungsmittel (16, 16') ein Druckfedersystem umfassen.

17. Schutzeinrichtung nach einem der Ansprüche 14 - 16,
**dadurch gekennzeichnet, dass**
die Beabstandungsmittel (16, 16') mindestens einen Bolzen (18, 18') umfassen, an dem die Schutzplatte (6, 6') angeordnet ist.

18. Schutzeinrichtung nach einem der Ansprüche 14 - 17,
**dadurch gekennzeichnet, dass**
die Beabstandungsmittel (16, 16') zumindest teilweise in einem Gehäuse (14, 14') aufgenommen sind.

19. Schutzeinrichtung nach einem der Ansprüche 13 - 18,
**dadurch gekennzeichnet, dass**
das Düsensystem eine Düsenaufnahme (8, 8') und eine Einschraubdüse (10, 10') umfasst.

20. Schutzeinrichtung nach einem der Ansprüche 13 - 19,
**dadurch gekennzeichnet, dass**
das Düsensystem beheizbar ist.

21. Schutzeinrichtung nach Anspruch 20,
**dadurch gekennzeichnet, dass**
an dem Düsensystem ein Heizband, vorzugsweise mit einem integriertem Thermofühler, vorgesehen ist.

22. Schutzeinrichtung nach einem der Ansprüche 13 - 21,
**dadurch gekennzeichnet, dass**
ein elektrischer Näherungsschalter (30') vorgesehen ist.

23. Schutzeinrichtung nach einem der Ansprüche 13 - 22,
**dadurch gekennzeichnet, dass**
vorzugsweise nach Art von Winkelblechen ausgebildete Befestigungsmittel (22, 22') an dem Grundelement vorgesehen sind.

24. Schutzeinrichtung nach einem der Ansprüche 13 - 23,
**dadurch gekennzeichnet, dass**
an der Schutzplatte (6, 6') eine Wanne anordenbar ist.

25. Schutzeinrichtung nach einem der Ansprüche 13 - 24,
**dadurch gekennzeichnet, dass**
die Schutzplatte (6, 6') verchromt ist.

26. Verfahren zum Betreiben einer Vorrichtung zum Einspritzen, mit einer Einspritzeinheit (2, 2') und einer Schutzeinrichtung (1, 1'), die eine Schutzplatte (6, 6') umfasst, wobei die Schutzplatte (6, 6') bei einem Andockvorgang relativ zu der Einspritzeinheit (2, 2') verfahren und in einem abgehobenen Zustand beabstandet zur Einspritzeinheit (2, 2') angeordnet wird,
**dadurch gekennzeichnet, dass**
die Einspritzeinheit (2, 2') und die Schutzplatte (6, 6') im angedockten Zustand eine Strömungsverbindung bilden.

27. Verfahren nach Anspruch 26,
**dadurch gekennzeichnet, dass**
die Strömungsverbindung mittels eines Düsensystems der Schutzplatte (6, 6') hergestellt wird.

28. Verfahren nach Anspruch 26 oder 27,
**dadurch gekennzeichnet, dass**
sich bei einem Abheben der Einspritzeinheit (2, 2') die Schutzplatte (6, 6') automatisch, vorzugsweise in Andockrichtung (28, 28'), von dieser beabstandet.

29. Verfahren nach einem der Ansprüche 26 - 28,
**dadurch gekennzeichnet, dass**
ein Näherungsschalter (30') misst, ob die Einspritzeinheit (2, 2') an einer Form angedockt ist, und eine Fehlermeldung erzeugt wird, wenn die Schutzplatte (6, 6') im abgehobenen Zustand nicht von der Einspritzeinheit (2, 2') beabstandet ist.

30. Verfahren nach einem der Ansprüche 26 - 29,
**dadurch gekennzeichnet, dass**
überschüssiges Material bei abgehobener Einspritzeinheit (2, 2') kontrolliert gegen die Schutzplatte (6, 6') abgespritzt wird.
